# EUROPEAN PATENT SPECIFICATION

(11) **EP 3 621 823 B1**
(45) Date of publication and mention of the grant of the patent: **03.03.2021**
(21) Application number: 18734614.3
(22) Date of filing: 09.05.2018
(51) Int. Cl.: B60C 11/03, B60C 11/12

(54) **TYRE FOR VEHICLE WHEELS**
REIFEN FÜR FAHRZEUGRÄDER
PNEU POUR ROUES DE VÉHICULE

(30) Priority: 12.05.2017 IT 201700051972; 20.11.2017 EP 17202579
(43) Date of publication of application: 18.03.2020
(73) Proprietor: Pirelli Tyre S.p.A., 20126 Milano (IT)
(72) Inventor: SPEZIARI, Diego Ettore, 20126 Milano (IT); MONTESELLO, Stefano, 20126 Milano (IT); BELLO, Vito, 20126 Milano (IT)
(74) Representative: Susanetto, Carlo
(86) International application number: PCT/IB2018/053221
(87) International publication number: WO 2018/207112

(56) References cited:
- EP-A1- 2 792 505
- EP-A1- 3 296 127
- EP-A1- 3 321 104
- EP-A2- 2 777 949
- EP-A2- 2 781 374
- WO-A1-01/39995
- WO-A1-2017/115195

## Description

The present invention relates to a tyre for vehicle wheels, in particular a tyre for high-performance cars.

A tyre generally comprises a carcass structure which is toroidally formed about an axis of rotation and which includes at least one carcass web which has end edges which engage in annular securing structures, known as bead cores, respectively.

In a radially external position with respect to the carcass structure, there is provided a belt structure comprising, in the case of car tyres, at least two radially superimposed strips of rubber fabric provided with reinforcement cords, usually of metal, which are arranged parallel with each other in each strip but crossed with respect to the cords of the adjacent strip, preferably symmetrically with respect to the equatorial plane of the tyre.

Preferably, the belt structure also comprises in a radially external position, at least at the ends of the belt strips below, a third layer of textile or metal cords which are arranged circumferentially (at 0 degrees). In tyres of the tubeless type there is further provided a radially internal layer which is referred to as a liner and which has impermeability characteristics in order to ensure the air-tightness for the tyre itself.

In a radially external position with respect to the belt structure, there is applied a tread band which is produced from elastomer material and on which there is defined a tread surface which is intended for contact with the road surface.

Tyres, in order also to ensure adequate grip on wet road surfaces, have a tread band which is provided with grooves and notches which have different shapes and geometries and which delimit portions of tread band intended to come into contact with the ground, known as blocks.

The overall configuration of the tread band defined by the set of grooves, notches and blocks represents the "tread pattern".

The main function of the grooves and of the notches is to allow the discharge of the water present between the surface of the tyre and the road surface during mutual contact, preventing the hydrostatic pressure resulting from the impact of the water against the tyre travelling forwards from being able to cause lifting, or partial lifting, of the tyre from the road surface and consequent loss of control of the vehicle (a phenomenon known as "aquaplaning").

The grooves and the notches formed in a circumferential direction can also influence the characteristics of the tyre in respect of the direction and stability of motion in relation to the tangential forces directed parallel to the axis of rotation of the tyre, when the vehicle is driven round bends.

The grooves and the notches formed in a transverse direction, in turn, can influence the traction characteristics of the tyre, specifically the ability to transmit to the road surface the tangential forces parallel to the direction of motion, in phases of acceleration and braking of the car.

WO 2009/060476, in the name of the same Applicant, describes a tyre of which the tread pattern comprises a pair of circumferential ribs on which there are formed respective pluralities of through-notches.

EP 2781374, EP 2792505, WO 01/39995, EP 2777949, EP 1614549 and US 9216618 describe other examples of tread patterns according to the prior art. Further examples of tread patterns are shown in WO 2017/115195, EP 3296127, EP 3321104 all representing prior art under Art. 54(3) EPC.

The Applicant has noticed that the configuration of the tread pattern, as defined by the shape, the orientation, and the number of grooves and notches, contributes in a significant manner to the determination of other important parameters of the tyre, such as, in particular, the rolling resistance.

This latter parameter is directly correlated with fuel consumption, and is therefore becoming increasingly important in the design of new tyres, even when intended for use in high-performance cars, in which case, of course, excellent characteristics with regard to braking, lateral grip when driving bends, and handling are required equally, both on dry surfaces and on wet surfaces. In addition to these requirements, there is also the absolute need to guarantee sufficient ability to quickly discharge water, which makes it possible to safely drive on wet road surfaces without experiencing aquaplaning phenomena.

The Applicant has also noticed how the configuration of grooves and notches sometimes produces effects of opposite value on the properties of the tyre, such that the definition of an optimal tread pattern requires a process of optimisation of the desired characteristics.

The Applicant has therefore felt the need to provide a tyre with a tread pattern able to provide optimal performances in terms of rolling resistance, but without compromising the performances in respect of lateral grip and braking grip and whilst also maintaining an appropriate ability to discharge water.

Firstly, the Applicant has confirmed that, in an asymmetrical tyre, in which the tread pattern is not symmetrical with respect to the equatorial plane of the tyre, the various requirements mentioned above can be satisfied differently by the various portions of the tread band.

In addition, the Applicant has noticed that an inhomogeneous distribution of the contact pressure of the various portions of tread band on the road surface involves an increase in the rolling resistance and therefore a loss of the sought performance. The Applicant has therefore perceived the importance of configuring the grooves and the notches of the tread pattern so as to promote the most homogeneous distribution possible of the contact pressure of the various portions of tread band on the road surface.

The Applicant has lastly found that the rolling resistance of a tyre, particularly of a high-performance tyre, can be significantly improved by adopting a tread pattern that provides at least a first circumferential rib on which there are formed, in succession, respective pluralities of long blind recesses and short blind recesses, and at least a second circumferential rib on which there is formed of a plurality of through-recesses.

In particular, in its first aspect, the invention relates to a tyre for vehicle wheels, according to claim 1.

Thanks to these features, the tyre according to the invention has a more homogeneous distribution of the contact pressures, thus resulting in optimal performances in terms of rolling resistance, simultaneously maintaining optimal performances both in terms of lateral grip when driving bends and in terms of braking, in each case guaranteeing an increased ability to discharge water, with corresponding optimal safety levels when driving on a wet road surface.

In particular, the Applicant has verified that this configuration makes the distribution of the contact pressures with the road surface particularly homogeneous.

At the same time, the provision of blind recesses of different extent means that the structure of the outer circumferential rib is not excessively weakened and is therefore sufficiently resistant to the lateral tangential stresses experienced when driving bends.

In particular, the first blind recesses have a first, proximal portion, which extends along a direction that is heavily inclined with respect to the circumferential direction, and a second, distal portion, which extends along a direction that is only slightly inclined with respect to the circumferential direction.

As a result of these features, the first blind recesses come into contact with the ground in a progressive manner, offering the road surface edges that are only slightly inclined with respect to the circumferential direction of the tyre. In this way, the noise of the tyre is reduced, as is also its rolling resistance, but without producing rib portions that are excessively pointed, that is to say with very small angles of incidence with the outer circumferential groove. Pointed portions of this kind, in fact, would be hardly resistant, locally, to the tangential stresses and, in addition, would be more heavily subjected to phenomena of localised wear.

The term "equatorial plane" of the tyre is intended to be understood to be a plane which is perpendicular to the rotation axis of the tyre and which subdivides the tyre into two equal portions.

The term "circumferential" direction is intended to refer to a direction which is generally directed in accordance with the rotation direction of the tyre, or at any rate slightly inclined (for example by approximately 5°) with respect to the rotation direction of the tyre.

The term "effective width" with reference to the tread band is intended to be understood to be the width of the radially outermost portion of the tread band, from side to side, which is intended for contact with the ground.

The term "groove" is intended to be understood to refer to a recess which is formed in a portion of the tread band and which has a width which is greater than or equal to 1.5 mm, preferably greater than or equal to 3 mm, and preferably a depth greater than 3 mm.

The term "notch" is intended to be understood to be a recess which is formed in a tread band portion and which has a width less than 1.5 mm, preferably less than or equal to 1 mm.

The width of said notches and grooves is intended to be measured to a depth greater than or equal to 1 mm, preferably greater than or equal to 1.5 mm.

The term "recess" is intended to refer synonymously to a notch or to a groove.

A recess, in particular notch, is defined as being "through" when it is open on two or more separate grooves, thus connecting them. In the case of branched recesses, a through-recess has at least two ends open on separate grooves.

A recess, in particular a notch, is said to be "blind" when it is not a through-recess. In particular, a blind recess can have a first end that is open on a groove, or a first end that is open on a groove and a second end that is open on a notch, or even two ends both open on two separate notches.

The term "longitudinal extension" of a recess, in particular a notch, is intended to mean the measurement of the length of the recess measured along its direction of extent on the tread surface, independently of its position or orientation thereon. The term "void-to-rubber ratio" is intended to mean the ratio between the total surface area of the grooves and notches contained in a specific portion of the tread pattern of the tyre intended to rest on the ground (where applicable, the whole of the tread pattern) and the total surface area of the specific portion of tread pattern (where applicable, the whole of the tread pattern).

The term "effective void-to-rubber ratio" is intended to mean the void-to-rubber ratio calculated on the basis of the consideration of the surface of tread band affected by any bevels with a depth less than 1 mm as being the surface in contact with the ground, that is to say as being "rubber". This parameter, compared to the total void-to-rubber ratio, more clearly indicates the fraction of the surface of the tread band affected by recesses (grooves or notches) which, on account of their depth, contribute more greatly to the ability to discharge water.

It is also noted that the void-to-rubber ratio of a portion of tread band delimited by one or more circumferential grooves is calculated on the basis of half of the respective circumferential grooves.

The term "bevel" in reference to a groove or a notch is intended to mean a surface portion that connects a side wall of the groove to the tread surface of the tyre, which has an inclination with respect to the radial direction of the tyre greater than the inclination of the side wall.

The present invention, in the above-mentioned aspect, can have at least one of the further preferred features indicated hereinafter.

Said at least one second circumferential rib preferably comprises an inner circumferential rib, which is formed on said inner tread band region.

Said inner circumferential rib is preferably delimited by a first inner circumferential groove and by a second inner circumferential groove, which is separate from, or coincides with, said second outer circumferential groove, thus forming said second pair of circumferential grooves.

In this way, given that the lateral tangential stresses experienced when driving bends are more concentrated in the outer region of the tread band, the provision of through-recesses on the inner circumferential rib advantageously makes it possible to maintain an increased ability to discharge water, without significantly affecting the performances of the tyre when driving bends.

In alternative embodiments of the present invention, it is provided that the first and second blind recesses are formed on a circumferential rib disposed in any position of the tread band portion contained between a pair of axially opposed shoulder regions. In particular, a circumferential rib of this kind can be disposed in an inner region of the tread band or in a middle region thereof, bridging the equatorial plane.

Similarly, in further alternative embodiments of the present invention it is provided that the through-recesses are formed on a circumferential rib disposed in any position of the tread band portion contained between a pair of axially opposed shoulder regions. In particular, a circumferential rib of this kind can be disposed in an outer region of the tread band or in a middle region thereof, bridging the equatorial plane.

Consequently, in the above-mentioned alternative embodiments, the circumferential rib on which the first and second blind recesses are formed and the circumferential rib on which the through-recesses formed can both be disposed in the inner region of the tread band, or can both be disposed in the outer region of the tread band, or one can be disposed in the middle region and the other can be disposed in the inner or outer region of the tread band, or one can be disposed in the inner region of the tread band and one can be disposed in the outer region of the tread band in an inverted position compared to the preferred embodiment described hereinafter.

Said first blind recesses are preferably alternate with said second blind recesses along the circumferential extent of said first circumferential rib.

As a result of this feature, the structural features of the outer circumferential rib are kept sufficiently uniform along its circumferential extent.

Said first blind recesses and said second blind recesses are preferably open, at a first end thereof, on said first outer circumferential groove.

In this way, the outer circumferential rib is affected by the blind recesses primarily on its axially outer side, where it is delimited by the first outer circumferential groove, whereas its axially inner side, where it is delimited by the second outer circumferential groove, is substantially continuous.

This advantageously allows the rib to offer increased resistance to the tangential stresses (both circumferential and lateral) and, at the same time, to improve the distribution of the contact pressure of the tyre.

In fact, the Applicant has verified how the bearing pressure at the road surface of the outer circumferential rib is more uniform when the first and second blind recesses are open only on the first outer circumferential groove, thus affecting primarily its axially outer side, compared to when some blind recesses are open on the second outer circumferential groove.

In one embodiment, a first circumferential notch is formed on said at least one first circumferential rib.

Said first blind recesses are preferably open, at a first end thereof, in said first circumferential notch.

Said second blind recesses preferably do not intersect said first circumferential notch.

In said first blind recesses, the second portion can be extended directly from the first portion, or the two portions can be connected to one another by connections of various type, for example by a curvilinear or rectilinear connection or by a connection of another configuration.

In said first blind recesses, said first inclination is preferably between 40° and 55°. In said first blind recesses, said second inclination is preferably between 15° and 30°.

In said first blind recesses, the ratio between the longitudinal extension of said first portion and the longitudinal extension of said second portion is preferably between 0.15 and 0.3.

In said first blind recesses, said first portion preferably has a longitudinal extent between 5 mm and 10 mm.

In said first blind recesses, said second portion preferably has a longitudinal extent between 20 mm and 40 mm.

Said first blind recesses preferably have an overall longitudinal extent between 30 mm and 45 mm.

Said second blind recesses preferably comprise a first portion, substantially rectilinear, which extends from said first outer circumferential groove with a first inclination with respect to a circumferential direction of said tread band, and a second portion, substantially rectilinear, which is connected to said first portion and has a second inclination with respect to said circumferential direction that is smaller than said first inclination.

In said second blind recesses, said first inclination is preferably between 40° and 55°.

In said second blind recesses, said second inclination is preferably between 15° and 30°.

As a result of these features, the second blind recesses come into contact with the ground in a progressive manner, offering the road surface edges that are only slightly inclined with respect to the circumferential direction of the tyre, thus reducing the noise and rolling resistance of the tyre, but without locally weakening the structure of the circumferential rib with pointed portions.

Said first portion of said second blind recesses is preferably substantially parallel to said first portion of said first blind recesses.

Said first portion of said second blind recesses preferably has a longitudinal extent substantially equal to the longitudinal extent of said first portion of said first blind recesses.

Said second portion of said second blind recesses is preferably substantially parallel to said second portion of said first blind recesses.

In said second blind recesses, the ratio between the longitudinal extent of said first portion and the longitudinal extent of said second portion is preferably between 0.7 and 1.2.

In said second blind recesses, said first portion preferably has a longitudinal extent between 5 mm and 10 mm.

In said second blind recesses, said second portion preferably has a longitudinal extent between 5 mm and 15 mm.

Said second blind recesses preferably have an overall longitudinal extent between 10 mm and 20 mm.

As a result of these features, the second blind recesses, which are shorter than the first blind recesses, provide the function of making the outer circumferential rib more flexible, in particular on its axially outer side, but without weakening the structure as a whole or compromising the rigidity values thereof.

The axial component of said first blind recesses preferably represents a fraction between 50% and 75% of the width of said outer circumferential rib.

The axial component of said second blind recesses preferably represents a fraction between 25% and 50% of the width of said outer circumferential rib.

In this way, the first blind recesses extend with one end thereof closed in the axially inner half of the outer circumferential rib, whilst the second blind recesses remain confined in the axially outer half thereof.

Said through-recesses preferably extend substantially rectilinearly.

Said through-recesses are preferably parallel to one another.

In this way, the through-recesses offer a sufficient ability to discharge water, connecting therebetween two circumferential grooves with a straight line, and subdividing the inner circumferential rib into blocks of similar shape, thus making the behaviour of the rib substantially homogeneous.

Said through-recesses are preferably inclined with respect to a circumferential direction of said tread band by an angle between 42° and 57°.

A central circumferential rib is preferably provided on said tread band, which rib is delimited by said second outer circumferential groove and by said second inner circumferential groove, which are separate from one another.

A plurality of third blind recesses having a third longitudinal extent are preferably formed in said central circumferential rib.

In an alternative embodiment, a plurality of third through-recesses are preferably formed in said central circumferential rib.

Said third blind recesses are preferably open in said second inner circumferential groove.

Said third blind recesses preferably extend towards said second outer circumferential groove.

Said third blind recesses are preferably parallel to one another.

Said third blind recesses are preferably inclined with respect to a circumferential direction of said tread band by an angle between 33° and 48°.

The axial component of said third blind recesses preferably represents a fraction between 40% and 50% of the width of said outer circumferential rib.

As a result of these features, a greater rigidity of the axially outer part of the central circumferential rib is maintained.

In one embodiment, said third blind recesses extend substantially rectilinearly.

In an alternative embodiment, said third blind recesses comprise a first portion, which extends from said second inner circumferential groove with a first inclination with respect to a circumferential direction of said tread band, and a second portion, which is connected to said first portion and has a second inclination with respect to said circumferential direction that is smaller than said first inclination.

Said first portions of said third blind recesses are preferably substantially parallel to said first portions of said second blind recesses.

Said second portions of said third blind recesses are preferably substantially parallel to said second portions of said second blind recesses.

Said second blind recesses and said third blind recesses are preferably substantially symmetrical to one another with respect to a circumferential direction and an axial direction defined on said tread band.

Said first end of each third blind recess is preferably axially offset with respect to said first end of said second blind recess by a distance, measured along said circumferential direction, between 0 and 10 mm, more preferably between 4 and 7 mm.

In one embodiment, a plurality of fourth blind recesses, having a fourth longitudinal extent, is formed in said central circumferential rib.

Said fourth longitudinal extent is preferably greater than said third longitudinal extent.

Said third blind recesses are preferably alternate with said fourth blind recesses along the circumferential extent of said central circumferential rib.

Said fourth blind recesses are preferably open, at a first end thereof, on said second inner circumferential groove.

In a preferred embodiment said fourth blind recesses comprise a first portion, which extends from said second inner circumferential groove with a first inclination with respect to a circumferential direction of said tread band, and a second portion, which is connected to said first portion and has a second inclination with respect to said circumferential direction that is smaller than said first inclination.

Said first portions of said fourth blind recesses are preferably substantially parallel to said first portions of said first blind recesses.

Said second portions of said fourth blind recesses are preferably substantially parallel to said second portions of said first blind recesses.

Said first blind recesses and said fourth blind recesses are preferably substantially symmetrical to one another with respect to a circumferential direction and an axial direction defined on said tread band.

Said first end of each fourth blind recess is preferably axially offset with respect to said first end of said first blind recess by a distance, measured along said circumferential direction, between 0 and 10 mm, more preferably between 4 and 7 mm.

In one embodiment a second circumferential notch is formed in said central circumferential ribs.

Said fourth blind recesses are preferably open, at one end thereof, in said second circumferential notch.

Said third blind recesses preferably do not intersect said second circumferential notch.

An outer shoulder region is preferably defined on said tread band and is delimited by said first outer circumferential groove, in which outer shoulder region a plurality of outer transverse grooves is formed, which are joined to said first outer circumferential groove by respective connecting notches.

Said connecting notches of said outer transverse grooves are preferably aligned with said first blind recesses or with said second blind recesses.

In this way, a structural continuity between the outer shoulder region and the outer circumferential rib is obtained.

An inner shoulder region is preferably defined on said tread band and is delimited by said first inner circumferential groove, in which inner shoulder region a plurality of inner transverse grooves is formed, which are joined to said first inner circumferential groove by respective connecting notches.

Said connecting notches and said inner transverse grooves are preferably aligned with said through-recesses.

In this way, a structural continuity between the inner shoulder region and the inner circumferential rib is obtained.

Said second outer circumferential groove and said second inner circumferential groove preferably have a width substantially identical to and greater than the width of said first outer circumferential groove and said first inner circumferential groove. In this way, a structural continuity between the outer shoulder region and the outer circumferential rib is obtained.

Said first outer circumferential groove preferably has a width smaller than the width of said first inner circumferential groove, of said second outer circumferential groove, and said second inner circumferential groove.

In this way, the outer region of the tread band is more rigid and more resistant to the tangential stresses.

The sum of the width of said inner shoulder region and of said first inner circumferential groove is preferably substantially identical to the sum of the width of said outer shoulder region and of said first outer circumferential groove.

The effective void-to-rubber ratio of the tread band, calculated over an effective width (L) of said tread band, is preferably smaller than or equal to approximately 0.33.

Said effective void-to-rubber ratio of the tread band is preferably greater than approximately 0.25, and said effective void-to-rubber ratio of the tread band is more preferably greater than approximately 0.27, and said effective void-to-rubber ratio of the tread band is even more preferably greater than approximately 0.28, and said effective void-to-rubber ratio of the tread band is most preferably greater than or equal to 0.29.

The effective void-to-rubber ratio of said outer region of the tread band, calculated over an effective width (L) of said tread band, it is preferably between 0.27 and 0.30, more preferably between 0.28 and 0.29.

The void-to-rubber ratio of said inner region, calculated over an effective width (L) of said tread band, of the tread band is preferably between 0.30 and 0.34, more preferably between 0.31 and 0.33.

It follows that the inner region of the tread band has a higher number of grooves and notches compared to the outer region of the tread band, thus conferring the aspects of water discharge to the inner region and the aspects of road surface grip to the outer region.

The effective void-to-rubber ratio of the portion of the tread band contained between said second outer circumferential groove and said second inner circumferential groove is preferably greater than the effective void-to-rubber ratio of the portion of the tread band contained between said second outer circumferential groove and said first outer circumferential groove, and also the effective void-to-rubber ratio of the portion of the tread band contained between said second inner circumferential groove and said first inner circumferential groove. In this way, the configuration of the tread band has a greater ability to discharge water in the central portion thereof, in a manner decreasing towards the shoulder regions, although it differs between the inner region of the tread band and the outer region of the tread band.
Said first blind recesses are preferably first blind notches.
Said second blind recesses are preferably second blind notches.
Said through-recesses are preferably through-notches.
Said third blind recesses are preferably third blind notches.
Said fourth blind recesses are preferably fourth blind notches.

In this way, the reference notches have a width smaller than 1.5 mm, preferably smaller than 1 mm, and therefore the circumferential rib in which said notches are formed is, overall, more rigid and resistant to the tangential stresses.

In an alternative (not described), the reference notches can have a width greater than or equal to 1.5 mm, thus improving the aspects of water discharge.

In a further aspect, the present invention relates to a tyre for vehicle wheels, comprising a tread band on which there are formed:
- a pair of shoulder regions that are axially opposite one another,
- at least a first circumferential rib interposed between said pair of shoulder regions and delimited by a first pair of circumferential grooves,
- at least a second circumferential rib interposed between said pair of shoulder regions and delimited by a second pair of circumferential grooves, which are separate from, or partially coincide with, said first pair of circumferential grooves,
- a plurality of first blind recesses, which have a first longitudinal extent and are formed in said first circumferential rib,
- a plurality of second blind recesses, which have a second longitudinal extent that is smaller than said first longitudinal extent and are formed in said first circumferential rib,
- a plurality of third blind recesses, which have a third longitudinal extent and are formed in said second circumferential rib,
- a plurality of fourth blind recesses, which have a fourth longitudinal extent greater than said third longitudinal extent and are formed in said second circumferential rib.

In said second aspect, it is preferred that said first blind recesses and said third blind recesses are substantially symmetrical to one another with respect to a circumferential direction and an axial direction defined on said tread band.

It is additionally preferred that said second blind recesses and said third blind recesses are substantially symmetrical to one another with respect to a circumferential direction and an axial direction defined on said tread band.

As a result of these features, the tyre has a significant improvement in terms of noise.

In fact, the presence in the second circumferential rib of a configuration of recesses substantially makes it possible to compensate, at least partially, for the noise generated by the recesses formed in the first circumferential rib, thanks to the offset of the frequency spectrum.

Said second circumferential rib is preferably adjacent to said first set and shall rib. Said second circumferential rib is preferably a central circumferential rib.

The features and advantages of the invention will become clearer from the detailed description of some of the preferred exemplary embodiments thereof, presented by way of non-limiting example with reference to the accompanying drawings, in which:
- figure 1 is a perspective view of a first example of a tyre for vehicle wheels formed in accordance with the present invention;
- figure 2 is a schematic view, on an enlarged scale, of a significant portion of the tread band of the tyre of figure 1,
- figure 3 is a view similar to figure 2 in which notches are shown devoid of bevels,
- figure 4 is a schematic view, on an enlarged scale, of a significant portion of the tread band of a second example of a tyre for vehicle
wheels formed in accordance with the present invention.

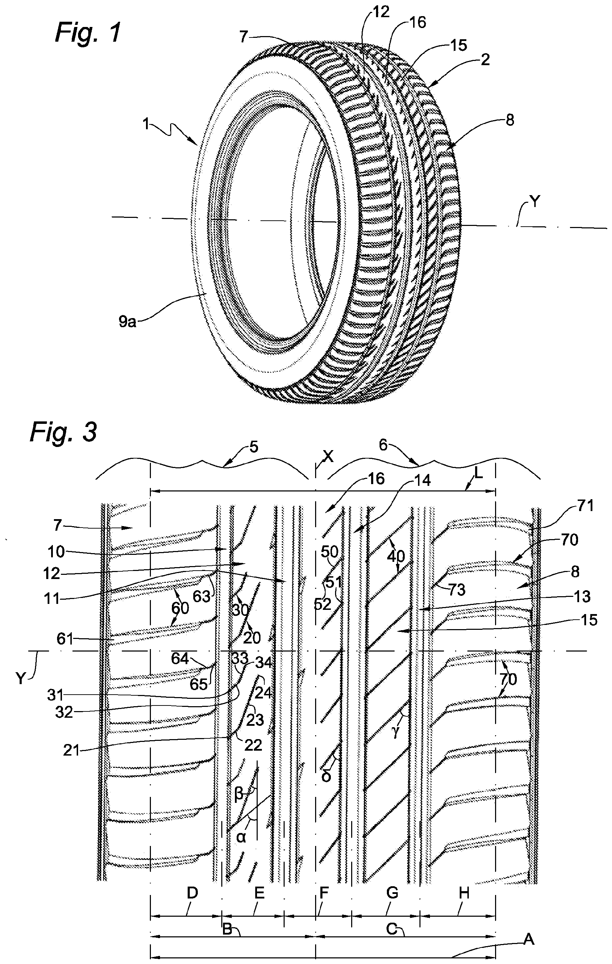

With reference firstly to figures 1 to 3, the number 1 denotes, overall, a first example of a tyre for vehicle wheels formed in accordance with the present invention.

The tyre 1 has a tyre structure that is conventional *per se* (not shown in the accompanying drawings) and also a tread band 2, on which there is defined a tread surface 3 disposed in a radially outer position relative to the tread band 2 and intended for contact with a road surface.

The tyre 1 has a conventional generically toroidal form developed about an axis of rotation, defining parallel thereto an axial direction Y on the tread surface 3, and passed through by an equatorial plane X, perpendicular to the axis of rotation and defining parallel thereto a circumferential direction on the tread surface 3.

The tyre 1 is preferably intended to be installed on a high-performance car and has a nominal cross-sectional width of approximately 225 mm with a rim diameter of 17 inches.

An effective width L, defined as the maximum width of the tread band intended to come into contact with the ground under conditions of standard use is identified on the tread band 2.

The equatorial plane X divides the tread band 2 into an outer region 5 of the tread band, intended to face towards the outside of the vehicle when the tyre is installed on the vehicle, and in inner region 6 of the tyre band, which is axially opposite the outer region 5.

A first outer circumferential groove 10 and a second outer circumferential groove 11 are formed on the outer region 5 of the tread band, with an outer circumferential rib 12 being delimited therebetween.

Similarly, on the inner region 6 of the tread band there are formed a first inner circumferential groove 13 and a second inner circumferential groove 14, with an inner circumferential rib 15 delimited therebetween.

Axially opposite one another with respect to the equatorial plane X, the first outer circumferential groove 10 delimits an outer shoulder region 7, whereas the first inner circumferential groove 13 delimits an inner shoulder region 8, respectively. The outer shoulder region 7 and the inner shoulder region 8 are also delimited, at their respective outer axial sides, by the outer edge 9a and the inner edge 9b of the tread band 2.

In the preferred embodiment described here, the second outer circumferential groove 11 and the second inner circumferential groove 14 are different and separate from one another, disposed symmetrically with respect to the equatorial plane X, thus defining a central circumferential rib 16 therebetween, said central circumferential rib extending along the equatorial plane X and being centred thereon.

In other embodiments not described in detail, the second outer circumferential groove 11 and the second inner circumferential groove 14 coincide with one another.

The second outer circumferential groove 11 and the second inner circumferential groove 14 have a constant width of approximately 13 mm, substantially identically to one another, whereas the first inner circumferential groove 13 has a constant width of approximately 11 mm and the first outer circumferential groove 10 has a width smaller than the other circumferential grooves, equal to approximately 7.5 mm.

The circumferential grooves 10, 11, 13 and 14 have a substantially identical depth, equal to approximately 7 mm.

The sum of the widths of the inner shoulder region 8 and of the first inner circumferential groove 13 is substantially identical to the sum of the width of the outer shoulder region 7 and of the first outer circumferential groove 10, such that, seeing as the first outer circumferential groove 10 is narrower than the first inner circumferential groove 13, the outer shoulder region 7 is accordingly wider than the inner shoulder region 8.

A plurality of first blind notches 20 and a plurality of second blind notches 30 are formed in the outer circumferential rib 12.

Each first blind notch 20 is open, at a first end 21 thereof, on the first outer circumferential groove 10 and comprises a first portion 22, substantially rectilinear, which extends from the first end 21 to within the outer circumferential rib 12, and a second portion 23, also substantially rectilinear, which extends from the first portion 22 to a second end 24 of the first blind notch 20, within the outer circumferential rib 12.

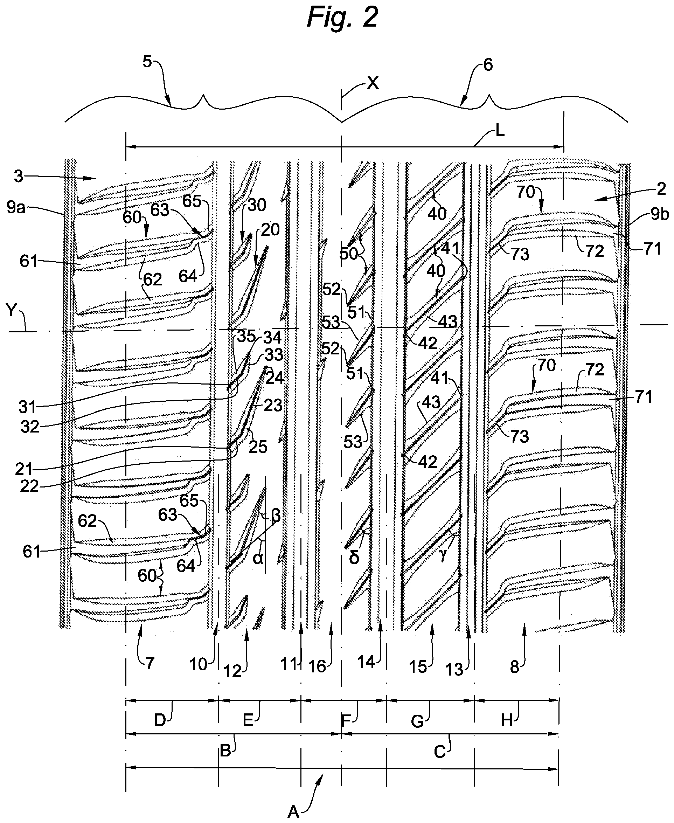

The first portion 22 of each first blind notch 20 has a longitudinal extent of approximately 7 mm and an inclination with respect to the circumferential direction of approximately 45°, represented by the angle α in figure 2.

The second portion 23 of each first blind notch 20 has a longitudinal extent of approximately 31 mm and an inclination with respect to the circumferential direction of approximately 19°, represented by the angle β in figure 2.

On the whole, therefore, the first blind notch 20 has a longitudinal extent of approximately 38 mm and extends within the outer circumferential rib 12 so as to protrude beyond the median line thereof, such that the axial component of its extent represents a fraction of approximately 65% of the width of the outer circumferential rib 12.

The first blind notches 20 have a depth of approximately 5 mm and a width of approximately 0.6 mm and are connected to the tread band 3 by means of a bevel 25 that has a depth of approximately 0.5 mm.

The second ends 24 of the first blind notches 20 are substantially aligned with one another along the circumferential direction.

The second blind notches 30 are disposed along the circumferential extent of the outer circumferential rib 12, in alternate succession with the first blind notches 20.

Each second blind notch 30 is open, at a first end 31 thereof, on the first outer circumferential groove and comprises a first portion 32, substantially rectilinear, which extends from the first end 31 to within the outer circumferential rib 12, and a second portion 33, which is also substantially rectilinear, which extends from the first portion 32 to a second end 34 of the second blind notch 30, within the outer circumferential rib 12.

The first portion 32 of each second blind notch 30 has a longitudinal extent of approximately 7 mm and an inclination with respect to the circumferential direction of approximately 45°, thus resulting in a substantially equal longitudinal extent and parallel to the first portion 22 of the first blind notches 20.

The second portion 33 of each second blind notch 30 has a longitudinal extent of approximately 10 mm and an inclination with respect to the circumferential direction of approximately 19°, thus resulting in an extent substantially parallel to the second portion 23 of the first blind notches 20, but with a substantially reduced longitudinal extent compared thereto.

On the whole, therefore, each second blind notch 30 has a longitudinal extent of approximately 17 mm and extends within the outer circumferential rib 12 without protruding beyond the median line thereof, such that the axial component of the extent thereof represents a fraction of approximately 35% of the width of the outer circumferential rib 12.

Similarly to the first blind notches 20, the second blind notches 30 also have a depth of approximately 5 mm and a width of approximately 0.6 mm and are connected to the tread surface 3 by means of a bevel 35 that has a depth of approximately 0.5 mm.

The second ends 34 of the second blind notches 30 are substantially aligned with one another in the circumferential direction.

On the inner circumferential rib 15 there is formed a plurality of through-notches 40, which extend in a substantially rectilinear direction between the first inner circumferential groove 13 and the second inner circumferential groove 14, in which circumferential grooves each through-notch 40 is open at respective ends 41 and 42.

The through-notches 40 extend in a substantially, rectilinear direction, inclined by approximately 47° with respect to the circumferential direction, represented by the angle γ in figure 2.

Similarly to the first and second blind notches 20, 30, the through-notches 40 also have a depth of approximately 5 mm and a width of approximately 0.6 mm and, in addition, are connected to the tread surface 3 by means of a bevel 43 that has a depth of approximately 0.5 mm.

On the central circumferential rib 16 there is formed a plurality of third blind notches 50, which, at a first end 51 thereof, are open in the second inner circumferential groove 14 and extend towards the second outer circumferential groove 11.

The third blind notches 50 extend in succession along the circumferential development of the central circumferential rib 16, in a manner substantially parallel to one another, in a substantially rectilinear direction, inclined by approximately 38° with respect to the circumferential direction, represented by the angle δ in figure 2.

Each third blind notch 50 extends within the central circumferential rib 16 from the first end 51 to a second end 52 thereof, for an overall longitudinal extent of approximately 16 mm.

The axial component of each third blind notch 50 represents a fraction of approximately 45% of the width of the central circumferential rib 16.

The third blind notches 50 have a depth of approximately 5 mm and a width of approximately 0.6 mm and are connected to the tread surface 3 by means of a bevel 53 that has a depth of approximately 0.5 mm.

The second ends 52 of the third blind notches 50 are substantially aligned with one another in the circumferential direction.

On the outer shoulder region 7 there is formed a plurality of outer transverse grooves 60, which, at a first end 61 thereof, are open at the outer edge 9a of the tread band 2 and extend in a direction heavily inclined with respect to the circumferential direction towards the first outer circumferential groove 10.

The outer transverse grooves 60 have a variable width between 3 mm and 6 mm, a depth of approximately 5 mm, and are connected to the tread surface 3 by means of a bevel 62 having a depth of approximately 0.7 mm.

The outer transverse grooves 60 are also connected to the first outer circumferential groove 10 by respective connection notches 63.

The connection notches 63 have a width of approximately 0.6 mm and have a curvilinear form on the whole with a first portion 64, which extends in alignment with the transverse groove, and a second portion 65, which is connected to the first portion 64 and extends towards the first outer circumferential groove 10 in alignment with a first blind notch 20 or a first blind notch 30.

Similarly, on the inner shoulder region 8 there is formed a plurality of inner transverse grooves 70, which, at a first end 71 thereof, are open at the inner edge 9b of the tread band 2 and extend in a direction heavily inclined with respect to the circumferential direction towards the first inner circumferential groove 13.

The inner transverse grooves 70 have a variable length between 3 mm and 6 mm, a depth of approximately 5 mm, and are connected to the tread surface 3 by means of a bevel 72 having a depth of approximately 0.7 mm.

The inner transverse grooves 70 are also connected to the first inner circumferential groove 13 by respective connection notches 73.

The connection notches 73 have a width of approximately 0.6 mm and have a rectilinear form on the whole, substantially aligned with a through-notch 40.

The tread pattern of the tyre 1, as defined in the configuration of grooves and notches just described, determines specific void-to-rubber ratios in the various portions of the tread band.

Table 1 below shows, for some significant portions of tread band 2, the values of the overall void-to-rubber ratio (thus considering the part of the surfaces affected by bevels with a depth less than 1 mm as surfaces not in contact with the road surface), as well as the values of the effective void-to-rubber ratio (thus considering the part of surfaces affected by bevels with a depth less than 1 mm as surfaces in contact with the road surface), both values being calculated both over the effective length L of the tread band 2 and over the total width thereof.

In particular, in Table 1 the various portions of tread band are defined as follows:
Portion A: portion of tread band contained between the axial ends for the calculation of the void-to-rubber ratio (entire width or effective width of the tread band);
Portion B: portion of the tread band contained between the equatorial plane and the outer axial end for the calculation of the void-to-rubber ratio (defined by the entire width or the effective width of the tread band);
Portion C: portion of the tread band contained between the equatorial plane and the inner axial end for the calculation of the void-to-rubber ratio (defined by the entire width or by the effective width of the tread band);
Portion D: portion of the tread band contained between the outer circumferential groove and the outer axial end for the calculation of the void-to-rubber ratio (defined by the entire width or by the effective width of the tread band);
Portion E: portion of the tread band contained between the first outer circumferential groove and the second outer circumferential groove;
Portion F: portion of the tread band contained between the second outer circumferential groove and the second inner circumferential groove;
Portion G: portion of the tread band contained between the second inner circumferential groove and the first inner circumferential groove;
Portion H: portion of the tread band contained between the second inner circumferential groove and the inner axial end for the calculation of the void-to-rubber ratio (defined by the entire width or by the effective width of the tread band).

Figures 2 and 3 show the tread band portions A-H in the case in which the void-to-rubber ratio is calculated over the effective width of the tread band.

In particular, figure 3 shows the case in which the effective void-to-rubber ratio is calculated, that is to say considering the bevels with a depth less than 1 mm as surfaces in contact with the road surface.

**Table 1**

| Tread band portion | Overall void-to-rubber ratio over effective width | Overall void-to-rubber ratio over total width | Effective void-to-rubber ratio over effective width | Effective void-to-rubber ratio over total width |
|---|---|---|---|---|
| Portion A | 0.46 | 0.44 | 0.31 | 0.29 |
| Portion B | 0.42 | 0.41 | 0.29 | 0.27 |
| Portion C | 0.50 | 0.46 | 0.33 | 0.30 |
| Portion D | 0.40 | 0.38 | 0.22 | 0.23 |
| Portion E | 0.45 | 0.45 | 0.31 | 0.31 |
| Portion F | 0.47 | 0.47 | 0.37 | 0.37 |
| Portion G | 0.53 | 0.53 | 0.35 | 0.35 |
| Portion H | 0.46 | 0.41 | 0.28 | 0.26 |

The effective void-to-rubber ratio calculated over the effective width of the tread band 2 is the parameter that has a greater influence on the ability to discharge water.

As can be seen from the analysis of the table, this parameter develops differently from the overall parameter. In particular, it tends to increase from the shoulder regions to the tread band portion contained between the second outer circumferential groove 11 and the second inner circumferential groove 14, which represents the central region of the tread band.

In addition, the table clearly shows the asymmetric nature of the tread band, with a much greater fraction of surface affected by grooves and notches in the inner region 5 of the tread band compared to the outer region 6 of the tread band.

The void-to-rubber ratios calculated on tyres of different sizes from that of the tyre 1, for example a tyre with a tread band of width equal to approximately 215 mm, differ only negligibly compared to the values shown in Table 1.

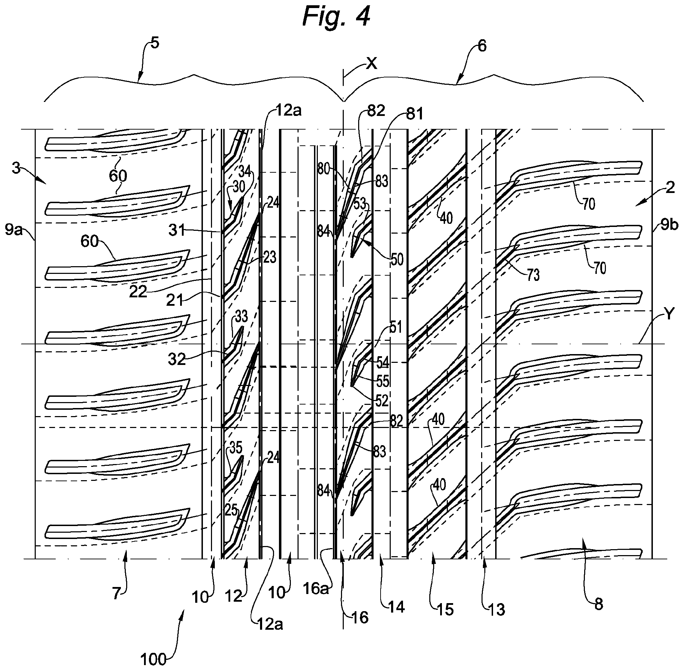

With specific reference to figure 4, number 100 denotes a second example of a tyre according to the invention, in which elements similar to the first exemplary embodiment are denoted by the same reference numbers.

The tyre 100 differs from the tyre 1 of the previous example by the features described below.

A first difference is provided by the fact that the outer transverse grooves 60 formed in the outer shoulder region 7 are separated from the first outer circumferential groove 10 in that no connection notches are provided.

A second difference is given by the fact that a first circumferential notch 12a, having a width of approximately 1 mm and a depth of approximately 2 mm, is formed in the outer circumferential rib 12.

The first circumferential notch 12a touches all of the first blind notches 20 at the second ends 24 thereof. It shall be noted that the first notches 20 are blind, however, insofar as they do not connect two separate grooves between them, but instead a groove and a notch.

The first circumferential notch 12a, instead, does not intersect any second blind notch 30.

A third difference is given by the fact that the third blind notches 50, on the central circumferential rib 16, are formed substantially symmetrically to the second blind notches 30 with respect to the circumferential direction and the axial direction Y (in other words, the second blind notches 30 and the third blind notches 50 are substantially symmetrical with respect to a centre of symmetry).

The third blind notches 50 therefore comprise a first portion 54, substantially rectilinear, which extends from the first end 51 to within the central circumferential rib 16, and a second portion 55, also substantially rectilinear, which extends from the first portion 54 to the second end 52, within the central circumferential rib 16. The first portion 54 of each first blind notch 50 has a longitudinal extent of approximately 7 mm and an inclination with respect to the circumferential direction of approximately 45°.

The second portion 55 of each third blind notch 50 has a longitudinal extent of approximately 10 mm and an inclination with respect to the circumferential direction of approximately 19°.

In addition, on the central circumferential rib 16 there is formed a plurality of fourth blind notches 80, which are disposed along the central circumferential rib 16 in positions alternate with the third notches 50.

The fourth blind notches 80 are also formed in a manner substantially symmetrical to the first blind notches 20 with respect to the circumferential direction and to the axial direction Y (in other words the first blind notches 20 and the fourth blind notches 80 are substantially symmetrical with respect to a centre of symmetry).

In particular, each fourth blind notch 80 is open, at one end 81 thereof, on the second inner circumferential groove 14 and comprises a first portion 82, substantially rectilinear, which extends from the first end 81 to within the central circumferential rib 16, and a second portion 83, also substantially rectilinear, which extends from the first portion 82 to a second end 84 of the fourth blind notch 80, within the central circumferential rib 16.

The first portion 82 of each fourth blind notch 80 has a longitudinal extent of approximately 7 mm and an inclination with respect to the circumferential direction of approximately 45°.

The second portion 83 of each fourth blind notch 80 has a longitudinal extent of approximately 31 mm and an inclination with respect to the circumferential direction of approximately 19°.

Overall, therefore, each fourth blind notch 80 has a longitudinal extent of approximately 38 mm, greater than the longitudinal extent of the third blind notches 50, and extends within the central circumferential rib 16 until it passes beyond the median line, such that the axial component of its extent represents a fraction of approximately 65% of the width of the central circumferential rib 16. The fourth blind notches 80 have a depth of approximately 5 mm and a width of approximately 0.6 mm and are connected to the tread surface 3 by means of a bevel 85 that has a depth of approximately 0.5 mm.

The second ends 84 of the fourth blind notches 80 are substantially aligned with one another in the circumferential direction.

In addition, on the central circumferential rib 16, there is formed a second circumferential notch 16a, having a depth and width similar to those of the first circumferential notch 12a.

The second circumferential notch 16a touches all of the fourth blind notches 80 at the second ends 84 thereof, whereas it does not intersect any third blind notch 50. In addition, the first end 81 of each fourth blind notch 80 is axially offset with respect to a first end 21 of a first blind notch 20 by a distance measured along the circumferential direction between 0 and 10 mm, for example approximately 4-7 mm.

Similarly, the first end 51 of each third blind notch 50 is axially offset with respect to a first end 31 of a second blind notch 30 by a distance measured along the circumferential direction between 0 and 10, for example approximately 4-7 mm.

### EXAMPLE

Tyres of measurement 215/55 R17 of the Cinturato P7 model, currently sold by the Applicant (comparison) and produced in accordance with the teaching of patent application WO 2009/060476, were measured in comparison with tyres of equal measurement having a tread pattern produced in accordance with the invention, according to the preferred example described above with reference to the accompanying drawings (invention).

A mathematical model developed by the Applicant made it possible, in the first instance, to demonstrate how, in the comparison tyre, an increased contact pressure is experienced in many regions axially outwardly of the shoulder regions, whereas, at the inner and outer circumferential ribs, in particular the respective axially outer sides thereof, the contact pressures are reduced.

In the tyre according to the invention, instead, the regions where the contact pressures have particularly high or particularly reduced values are significantly more limited compared to those of the comparison tyre.

Thus, in the tyre according to the invention, the contact pressures with the road surface are therefore distributed more homogeneously in the various portions of the tread band.

The Applicant therefore performed a series of tests according to known standards, on various long-distance surfaces, in particular on wet and dry road surfaces, in order to measure a number of characteristic parameters.

The test results are summarised in Table 2 below, in which the values of the parameters are expressed in percentage, with the values relating to the comparison tyre being equal to 100.

**Table 2**

| | Comparison | Invention |
|---|---|---|
| Rolling resistance | 100 | 115 |
| Dry braking | 100 | 102 |
| Wet braking | 100 | 101 |
| Aquaplaning in a straight line | 100 | 101 |
| Aquaplaning in bends | 100 | 105 |
| Handling | 100 | 100 |

The tests therefore show how the tyre of the invention thus demonstrates a significant and substantial improvement of the rolling resistance, quantified to be approximately 15% better compared to the comparison tyre.

It can also be seen that the tests demonstrated that the significant improvement in the rolling resistance was not achieved to the detriment of any other driving parameters compared to the comparison tyre.

On the contrary, the behaviour of the tyre both under braking and in the case of aquaplaning is also improved.

## Claims

1. Tyre (1) for vehicle wheels, comprising a tread band (2) divided by an equatorial plane (X) of said tyre into an outer tread band region (5), intended to face the outside of said vehicle when the tyre is mounted on said vehicle, and an inner tread band region (6), which is axially opposite said outer region, wherein on said tread band there are formed:
- a pair of shoulder regions (7, 8) that are axially opposite one another;
- at least a first circumferential rib (12) interposed between said pair of shoulder regions and delimited by a first pair of circumferential grooves (10, 11);
- a plurality of first blind recesses (20), which are formed in said first circumferential rib (12) and have a first longitudinal extension,
- a plurality of second blind recesses (30), which are formed in said first circumferential rib (12) and have a second longitudinal extension that is smaller than said first longitudinal extension,
- at least a second circumferential rib (15) interposed between said pair of shoulder regions and delimited by a second pair of circumferential grooves (13, 14), said second pair of circumferential grooves being separate from, or partially coinciding with, said first pair of circumferential grooves (10, 11);
- a plurality of through-recesses (40), which are formed in said second circumferential rib (15) and extend between the circumferential grooves (13, 14) of said second pair of circumferential grooves,
and wherein:
- said at least one first circumferential rib comprises an outer circumferential rib (12), which is formed on said outer tread band region (5) and is delimited by a first outer circumferential groove (10) and by a second outer circumferential groove (11) which form said first pair of circumferential grooves; and
- said first blind recesses (20) comprise a first portion (22), substantially rectilinear, which extends from said first outer circumferential groove (10) with a first inclination with respect to a circumferential direction of said tread band, and a second portion (23), substantially rectilinear, which is connected to said first portion (22) and has a second inclination with respect to said circumferential direction that is smaller than said first inclination.

2. Tyre according to Claim 1, wherein said at least one second circumferential rib comprises an inner circumferential rib (15), which is formed on said inner tread band region (6) and is delimited by a first inner circumferential groove (13) and by a second inner circumferential groove (14), which is separate from, or coincides with, said second outer circumferential groove, which form said second pair of circumferential grooves.

3. Tyre according to Claim 1 or Claim 2, wherein said first blind recesses (20) alternate with said second blind recesses (30) along the circumferential extent of said first circumferential rib (12).

4. Tyre according to any of the preceding Claims, wherein said first blind recesses (20) and said second blind recesses (30) are open, at a first end (21; 31) thereof, on said first outer circumferential groove (12).

5. Tyre according to any of the preceding Claims, wherein, in said first blind recesses (20), said first inclination is between 40° and 55° and said second inclination is between 15° and 30°.

6. Tyre according to any of the preceding Claims, wherein, in said first blind recesses (20) the ratio between the longitudinal extension of said first portion (22) and the longitudinal extension of said second portion (23) is between 0.15 and 0.3.

7. Tyre according to any of the preceding Claims, wherein, in said first blind recesses, said first portion (22) has a longitudinal extent of between 5 mm and 10 mm and said second portion (23) has a longitudinal extent of between 20 mm and 40 mm.

8. Tyre according to any one of the preceding Claims, wherein said second blind recesses (30) comprise a first portion (32), substantially rectilinear, which extends from said first outer circumferential groove (12) with a first inclination with respect to a circumferential direction of said tread band, and a second portion (33), substantially rectilinear, which is connected to said first portion (32) and has a second inclination with respect to said circumferential direction that is smaller than said first inclination.

9. Tyre according to any one of the preceding Claims, wherein said through-recesses (40) extend substantially rectilinearly, are parallel to one another and are inclined with respect to a circumferential direction of said tread band by an angle of between 42° and 57°.

10. Tyre according to any one of the preceding Claims, wherein a central circumferential rib (16) is provided on said tread band (2), which is delimited by said second outer circumferential groove (11) and by said second inner circumferential groove (14), which are separate from one another.

11. Tyre according to Claim 10, wherein a plurality of third blind recesses (50) are formed in said central circumferential rib (16).

12. Tyre according to any one of the preceding Claims, wherein the effective void-to-rubber ratio of the tread band (2), calculated over an effective width (L) of said tread band, is between 0.25 and 0.33, preferably between 0.27 and 0.33, more preferably between 0.29 and 0.33.

13. Tyre according to any one of the preceding Claims, wherein the effective void-to-rubber ratio of said outer tread band region (2), calculated over an effective width (L) of said tread band, is between 0.27 and 0.30, preferably between 0.28 and 0.29.

14. Tyre according to any one of the preceding Claims, wherein the effective void-to-rubber ratio of said inner tread band region (8), calculated over an effective width (L) of said tread band, is between 0.30 and 0.34, preferably between 0.31 and 0.33.

15. Tyre according to any one of the preceding Claims, wherein the effective void-to-rubber ratio of the tread band portion arranged between said second outer circumferential groove (11) and said second inner circumferential groove (14) is greater than the effective void-to-rubber ratio of the tread band portion arranged between said second outer circumferential groove (11) and said first outer circumferential groove (10), as well as than the effective void-to-rubber ratio of the tread band portion arranged between said second inner circumferential groove (14) and said first inner circumferential groove (13).

## Patentansprüche

1. Reifen (1) für Fahrzeugräder, umfassend einen Laufflächenring (2), der durch eine Äquatorialebene (X) des Reifens in eine äußere Laufflächenringregion (5), die dazu vorgesehen ist, zu der Außenseite des Fahrzeugs hin zu weisen, wenn der Reifen an dem Fahrzeug montiert ist, und eine innere Laufflächenringregion (6), die der äußeren Region axial gegenüberliegt, unterteilt wird, wobei an dem Laufflächenring ausgebildet ist:
- ein Paar von Schulterregionen (7, 8), die einander axial gegenüberliegen;
- zumindest eine erste umlaufende Rippe (12), die zwischen dem Paar von Schulterregionen angeordnet ist und durch ein erstes Paar von umlaufenden Nuten (10, 11) begrenzt wird;
- eine Vielzahl von ersten Blindvertiefungen (20), die in der ersten umlaufenden Rippe (12) ausgebildet sind und eine erste Längserstreckung aufweisen,
- eine Vielzahl von zweiten Blindvertiefungen (30), die in der ersten umlaufenden Rippe (12) ausgebildet sind und eine zweite Längserstreckung aufweisen, die geringer ist als die erste Längserstreckung,
- zumindest eine zweite umlaufende Rippe (15), die zwischen dem Paar von Schulterregionen angeordnet ist und durch ein zweites Paar von umlaufenden Nuten (13, 14) begrenzt wird, wobei das zweite Paar von umlaufenden Nuten von dem ersten Paar von umlaufenden Nuten (10, 11) getrennt ist oder zum Teil mit diesem zusammenfällt;
- eine Vielzahl von durchgehenden Vertiefungen (40), die in der zweiten umlaufenden Rippe (15) ausgebildet sind und sich zwischen den umlaufenden Nuten (13, 14) des zweiten Paars von umlaufenden Nuten erstrecken,
und wobei:
- die zumindest eine erste umlaufende Rippe eine äußere umlaufende Rippe (12) umfasst, die an der äußeren Laufflächenringregion (5) ausgebildet ist und durch eine erste äußere umlaufende Nut (10) und durch eine zweite äußere umlaufende Nut (11) begrenzt wird, welche das erste Paar von umlaufenden Nuten bilden; und
- wobei die ersten Blindvertiefungen (20) einen ersten im Wesentlichen geradlinigen Abschnitt (22) umfassen, der sich von der ersten äußeren umlaufenden Nut (10) mit einer ersten Schräge in Bezug auf eine Umfangsrichtung des Laufflächenrings erstreckt, sowie einen zweiten im Wesentlichen geradlinigen Abschnitt (23), der mit dem ersten Abschnitt (22) verbunden ist und eine zweite Schräge in Bezug auf die Umfangsrichtung aufweist, die geringer ist als die erste Schräge.

2. Reifen nach Anspruch 1, wobei die zumindest eine zweite umlaufende Rippe eine innere umlaufende Rippe (15) umfasst, die an der inneren Laufflächenringregion (6) ausgebildet ist und durch eine erste innere umlaufende Nut (13) und durch eine, von der zweiten äußeren Nut getrennte oder damit zusammenfallende, zweite innere umlaufende Nut (14) begrenzt wird, die das erste Paar von umlaufenden Nuten bilden.

3. Reifen nach Anspruch 1 oder Anspruch 2, wobei die ersten Blindvertiefungen (20) sich mit den zweiten Blindvertiefungen (30) entlang der Umfangserstreckung der ersten umlaufenden Rippe (12) abwechseln.

4. Reifen nach einem der vorhergehenden Ansprüche, wobei die ersten Blindvertiefungen (20) und die zweiten Blindvertiefungen (30) an einem ersten Ende (21; 31) davon an der ersten äußeren umlaufenden Nut (12) offen sind.

5. Reifen nach einem der vorhergehenden Ansprüche, wobei in den ersten Blindvertiefungen (20) die erste Schräge zwischen 40° und 55° und die zweite Schräge zwischen 15° und 30° beträgt.

6. Reifen nach einem der vorhergehenden Ansprüche, wobei in den ersten Blindvertiefungen (20) das Verhältnis zwischen der Längserstreckung des ersten Abschnitts (22) und der Längserstreckung des zweiten Abschnitts (23) zwischen 0,15 und 0,3 beträgt.

7. Reifen nach einem der vorhergehenden Ansprüche, wobei in den ersten Blindvertiefungen der erste Abschnitt (22) eine Längsausdehnung zwischen 5 mm und 10 mm aufweist, und der zweite Abschnitt (23) eine Längsausdehnung zwischen 20 mm und 40 mm aufweist.

8. Reifen nach einem der vorhergehenden Ansprüche, wobei die zweiten Blindvertiefungen (30) einen ersten im Wesentlichen geradlinigen Abschnitt (32) umfassen, der sich von der ersten äußeren umlaufenden Nut (12) mit einer ersten Schräge in Bezug auf eine Umfangsrichtung des Laufflächenrings erstreckt, sowie einen zweiten im Wesentlichen geradlinigen Abschnitt (33), der mit dem ersten Abschnitt (32) verbunden ist und eine zweite Schräge in Bezug auf die Umfangsrichtung aufweist, die geringer ist als die zweite Schräge.

9. Reifen nach einem der vorhergehenden Ansprüche, wobei die durchgehenden Vertiefungen (40) sich im Wesentlichen geradlinig erstrecken, zueinander parallel sind und in Bezug auf eine Umfangsrichtung des Laufflächenrings in einem Winkel zwischen 42° und 57° schräg sind.

10. Reifen nach einem der vorhergehenden Ansprüche, wobei eine zentrale umlaufende Rippe (16) an dem Laufflächenring (2) vorgesehen ist, die durch die zweite äußere umlaufende Nut (11) und durch die zweite innere umlaufende Nut (14), die voneinander getrennt sind, begrenzt wird.

11. Reifen nach Anspruch 10, wobei eine Vielzahl von dritten Blindvertiefungen (50) in der zentralen umlaufenden Rippe (16) ausgebildet sind.

12. Reifen nach einem der vorhergehenden Ansprüche, wobei das effektive Gesamtverhältnis der negativen und positiven Profilanteile des Laufflächenrings (2), berechnet über eine effektive Breite (L) des Laufflächenrings, zwischen 0,25 und 0,33, vorzugsweise zwischen 0,27 und 0,33, noch bevorzugter zwischen 0,29 und 0,33 beträgt.

13. Reifen nach einem der vorhergehenden Ansprüche, wobei das effektive Gesamtverhältnis der negativen und positiven Profilanteile der äußeren Laufflächenringregion (2), berechnet über eine effektive Breite (L) des Laufflächenrings, zwischen 0,27 und 0,30, vorzugsweise zwischen 0,28 und 0,29 beträgt.

14. Reifen nach einem der vorhergehenden Ansprüche, wobei das effektive Gesamtverhältnis der negativen und positiven Profilanteile der inneren Laufflächenringregion (8), berechnet über eine effektive Breite (L) des Laufflächenrings, zwischen 0,30 und 0,34, vorzugsweise zwischen 0,31 und 0,33 beträgt.

15. Reifen nach einem der vorhergehenden Ansprüche, wobei das effektive Gesamtverhältnis der negativen und positiven Profilanteile des Laufflächenringabschnitts, der zwischen der zweiten äußeren umlaufenden Nut (11) und der zweiten inneren umlaufenden Nut (14) angeordnet ist, größer ist als das effektive Gesamtverhältnis der negativen und positiven Profilanteile des Laufflächenringabschnitts, der zwischen der zweiten äußeren umlaufenden Nut (11) und der ersten äußeren umlaufenden Nut (10) angeordnet ist, sowie größer als das effektive Gesamtverhältnis der negativen und positiven Profilanteile des Laufflächenringabschnitts, der zwischen der zweiten inneren umlaufenden Nut (14) und der ersten inneren umlaufenden Nut (13) angeordnet ist.

## Revendications

1. Pneu (1) pour roues de véhicule, comprenant une bande de roulement (2) divisée par un plan équatorial (X) dudit pneu en une région de bande de roulement externe (5), destinée à faire face à l'extérieur dudit véhicule lorsque le pneu est monté sur ledit véhicule, et une région de bande de roulement interne (6), qui est axialement opposée à ladite région externe, où sur ladite bande de roulement sont formés :
- une paire de régions d'épaulement (7, 8) qui sont axialement opposées l'une à l'autre ;
- au moins une première nervure circonférentielle (12) interposée entre ladite paire de régions d'épaulement et délimitée par une première paire de rainures circonférentielles (10, 11) ;
- une pluralité de premiers évidements borgnes (20), qui sont formés dans ladite première nervure circonférentielle (12) et ont une première extension longitudinale,
- une pluralité de deuxièmes évidements borgnes (30), qui sont formés dans ladite première nervure circonférentielle (12) et ont une deuxième extension longitudinale qui est plus petite que ladite première extension longitudinale,
- au moins une deuxième nervure circonférentielle (15) interposée entre ladite paire de régions d'épaulement et délimitée par une deuxième paire de rainures circonférentielles (13, 14), ladite deuxième paire de rainures circonférentielles étant séparées de, ou coïncidant partiellement avec, ladite première paire de rainures circonférentielles (10, 11) ;
- une pluralité d'évidements traversants (40), qui sont formés dans ladite deuxième nervure circonférentielle (15) et s'étendent entre les rainures circonférentielles (13, 14) de ladite deuxième paire de rainures circonférentielles,
et dans lequel :
- ladite au moins une première nervure circonférentielle comprend une nervure circonférentielle externe (12), qui est formée sur ladite région de bande de roulement externe (5) et est délimitée par une première rainure circonférentielle externe (10) et par une deuxième rainure circonférentielle externe (11) qui forment ladite première paire de rainures circonférentielles ; et
- lesdits premiers évidements borgnes (20) comprennent une première partie (22), essentiellement rectiligne, qui s'étend depuis ladite première rainure circonférentielle externe (10) avec une première inclinaison par rapport à une direction circonférentielle de ladite bande de roulement, et une deuxième partie (23), essentiellement rectiligne, qui est reliée à ladite première partie (22) et a une deuxième inclinaison par rapport à ladite direction circonférentielle qui est plus petite que ladite première inclinaison.

2. Pneu selon la revendication 1, dans lequel ladite au moins une deuxième nervure circonférentielle comprend une nervure circonférentielle interne (15), qui est formée sur ladite région de bande de roulement interne (6) et est délimitée par une première rainure circonférentielle interne (13) et par une deuxième rainure circonférentielle interne (14), qui est séparée de, ou coïncide avec, ladite deuxième rainure circonférentielle externe, qui forment ladite deuxième paire de rainures circonférentielles.

3. Pneu selon la revendication 1 ou 2, dans lequel lesdits premiers évidements borgnes (20) sont en alternance avec lesdits deuxièmes évidements borgnes (30) le long de l'étendue circonférentielle de ladite première nervure circonférentielle (12).

4. Pneu selon l'une des revendications précédentes, dans lequel lesdits premiers évidements borgnes (20) et lesdits deuxièmes évidements borgnes (30) sont ouverts, au niveau d'une première extrémité (21 ; 31) de ceux-ci, sur ladite première rainure circonférentielle externe (12).

5. Pneu selon l'une des revendications précédentes, dans lequel, dans lesdits premiers évidements borgnes (20), ladite première inclinaison est comprise entre 40° et 55° et ladite deuxième inclinaison est comprise entre 15° et 30°.

6. Pneu selon l'une des revendications précédentes, dans lequel, dans lesdits premiers évidements borgnes (20), le rapport entre l'extension longitudinale de ladite première partie (22) et l'extension longitudinale de ladite deuxième partie (23) est compris entre 0,15 et 0,3.

7. Pneu selon l'une des revendications précédentes, dans lequel, dans lesdits premiers évidements borgnes, ladite première partie (22) a une étendue longitudinale comprise entre 5 mm et 10 mm et ladite deuxième partie (23) a une étendue longitudinale comprise entre 20 mm et 40 mm.

8. Pneu selon l'une quelconque des revendications précédentes, dans lequel lesdits deuxièmes évidements borgnes (30) comprennent une première partie (32), essentiellement rectiligne, qui s'étend depuis ladite première rainure circonférentielle externe (12) avec une première inclinaison par rapport à une direction circonférentielle de ladite bande de roulement, et une deuxième partie (33), essentiellement rectiligne, qui est reliée à ladite première partie (32) et a une deuxième inclinaison par rapport à ladite direction circonférentielle qui est plus petite que ladite première inclinaison.

9. Pneu selon l'une quelconque des revendications précédentes, dans lequel lesdits évidements traversants (40) s'étendent de manière essentiellement rectiligne, sont parallèles les uns aux autres et sont inclinés par rapport à une direction circonférentielle de ladite bande de roulement d'un angle compris entre 42° et 57°.

10. Pneu selon l'une quelconque des revendications précédentes, dans lequel une nervure circonférentielle centrale (16) est prévue sur ladite bande de roulement (2), qui est délimitée par ladite deuxième rainure circonférentielle externe (11) et par ladite deuxième rainure circonférentielle interne (14), qui sont séparées l'une de l'autre.

11. Pneu selon la revendication 10, dans lequel une pluralité de troisièmes évidements borgnes (50) sont formés dans ladite nervure circonférentielle centrale (16).

12. Pneu selon l'une quelconque des revendications précédentes, dans lequel le rapport vide-caoutchouc effectif de la bande de roulement (2), calculé sur une largeur effective (L) de ladite bande de roulement, est compris entre 0,25 et 0,33, de préférence entre 0,27 et 0,33, plus préférablement entre 0,29 et 0,33.

13. Pneu selon l'une quelconque des revendications précédentes, dans lequel le rapport vide-caoutchouc effectif de ladite région de bande de roulement externe (2), calculé sur une largeur effective (L) de ladite bande de roulement, est compris entre 0,27 et 0,30, de préférence entre 0,28 et 0,29.

14. Pneu selon l'une quelconque des revendications précédentes, dans lequel le rapport vide-caoutchouc effectif de ladite région de bande de roulement interne (8), calculé sur une largeur effective (L) de ladite bande de roulement, est compris entre 0,30 et 0,34, de préférence entre 0,31 et 0,33.

15. Pneu selon l'une quelconque des revendications précédentes, dans lequel le rapport vide-caoutchouc effectif de la partie de bande de roulement agencée entre ladite deuxième rainure circonférentielle externe (11) et ladite deuxième rainure circonférentielle interne (14) est plus grand que le rapport vide-caoutchouc effectif de la partie de bande de roulement agencée entre ladite deuxième rainure circonférentielle externe (11) et ladite première rainure circonférentielle externe (10), ainsi que le rapport vide-caoutchouc effectif de la partie de bande de roulement agencée entre ladite deuxième rainure circonférentielle interne (14) et ladite première rainure circonférentielle interne (13).
